Europäisches Patentamt

European Patent Office

Office européen des brevets

(11) Veröffentlichungsnummer: **0 212 101**
**A2**

## (12) EUROPÄISCHE PATENTANMELDUNG

(21) Anmeldenummer: 86107575.2

(22) Anmeldetag: 04.06.86

(51) Int. Cl.⁴: **B01D 53/04** , B01D 53/26

(30) Priorität: 13.07.85 DE 3525083

(43) Veröffentlichungstag der Anmeldung:
04.03.87 Patentblatt 87/10

(84) Benannte Vertragsstaaten:
**DE FR GB NL SE**

(71) Anmelder: **ROBERT BOSCH GMBH**
**Postfach 50**
**D-7000 Stuttgart 1(DE)**

(72) Erfinder: **Haas, Heino, Dipl.-Ing.**
**Weinstrasse 9**
**D-7129 Zaberfeld(DE)**

(54) **Vorrichtung zum Trocknen von Druckluft.**

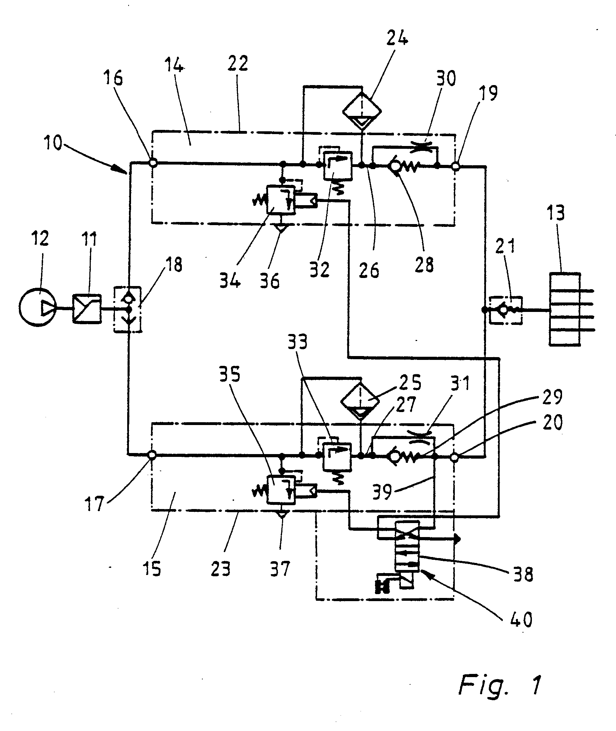

(57) Eine nach dem Prinzip des Zwei-Behälter-Lufttrockners arbeitende Vorrichtung zum Trocknen von Druckluft weist zwei in Intervallen wechselweise in Trocknungsphase und Regenerationsphase betriebene Lufttrockner (14,15) auf, deren Umschaltung durch ein elektronisches Steuerventil (40) gesteuert wird. Zur Verkleinerung des Steuerventils (40) in Durchfluß, Volumen und Leistung sind die Lufttrockner (14,15) eingangsseitig mit einem Wechselventil - (18) verbunden und zusätzlich an jeweils einem pneumatisch gesteuerten Zweiwegeventil (34,35) angeschlossen, das eine Entlüftungsöffnung (36,37) in seiner gesteuerten Schaltstellung freigibt und in seiner ungesteuerten Schaltstellung sperrt. Eine Zweiwegeventile (34,35) werden von dem Steuerventil (40) gesteuert, wobei der Steuerdruck an den Steuereingang desjenigen Zweiwegeventils (34,35) gelegt wird, das dem in Regenerationsphase betriebenen Lufttrockner (14,15) zugehörig ist. Der Steuereingang des Zweiwegeventils (34,35), das dem in der Trockenphase befindlichen Lufttrockner (14,15) zugehörig ist, wird zugleich über das Steuerventil - (40) entlüftet (Fig.1).

Fig. 1

## Vorrichtung zum Trocknen von Druckluft

### Stand der Technik

Die Erfindung geht aus von einer Vorrichtung zum Trocknen von Druckluft, insbesondere für Druckluftsysteme, wie Druckluftbremsanlagen, Türschließanlagen u.dgl., nach der Gattung des Anspruchs 1.

Bei einer bekannten Lufttrocknungsvorrichtung dieser Art ist das als 4/2-Wege-Magnetventil ausgebildete Steuerventil im Druckluftstrom den Eingängen der beiden Lufttrockner vorgeschaltet. Seine gesteuerten Anschlüsse verbinden einerseits den Eingang des in der Trocknungsphase betriebenen Lufttrockners mit der von einem Luftkompressor geförderten Druckluft und bilden andererseits für den in der Regenerationsphase betriebenen Lufttrockner den Entlüftungsausgang. Das Steuerventil schaltet damit jeweils den gesamten, vom Luftkompressor kommenden Druckluftstrom auf den jeweiligen Lufttrockner und muß entsprechend hinsichtlich seines Schaltvolumens und seiner Schaltleistung relativ groß dimensioniert werden.

### Vorteile der Erfindung

Die erfindungsgemäße Vorrichtung zum Trocknen von Druckluft mit den kennzeichnenden Merkmalen des Anspruchs 1 hat demgegenüber den Vorteil, daß das elektromagnetische Steuerventil nur die Steuerdrücke für die Zweiwegeventile in den beiden Lufttrocknern zu schalten hat. Das im Falle der Ausbildung als 4/2-Wege-Magnetventil - (Ausführungsform gemäß Anspruch 9) und der Realisierung aus zwei 3/2-Wege-Magnetventilen - (Ausführungsform gemäß Anspruch 11) sich in den Herstellungskosten der Lufttrocknungsvorrichtung merklich niederschlagende Steuerventil kann damit im Durchfluß, Volumen und in der Leistung sehr klein gehalten werden, so daß die Fertigungskosten gegenüber der bekannten Trocknungsvorrichtung erheblich reduziert werden können. Für die zusätzlich notwendigen Zweiwegeventile lassen sich preiswerte Serienventile einsetzen, die nicht annähernd den durch die Verkleinerung des Steuerventils erzielten Kostenvorteil kompensieren.

Als Lufttrockner können bei der erfindungsgemäßen Lufttrocknungsvorrichtung überdies preiswerte Einbehälterlufttrockner verwendet werden und damit deren Einsatzgebiet auf Druckluftanlagen mit großem Druckluftverbrauch ausgedehnt werden. Durch Erschließen dieses neuen Anwendungsgebietes der Einbehälterlufttrockner kann deren Absatzmöglichkeit vergrößert und diese durch höhere Stückzahl in der Serienfertigung noch preiswerter her gestellt werden. Trotz Verwendung der Einbehälterlufttrockner ist die Funktion und die Wirkung der erfindungsgemäßen Lufttrocknungsvorrichtung die eines Zweibehälterlufttrockners.

Durch die in den weiteren Ansprüchen aufgeführten Maßnahmen sind vorteilhafte Weiterbildungen und Verbesse rungen der im Anspruch 1 angegebenen Lufttrocknungsvorrichtung möglich.

Eine vorteilhafte Ausführungsform der Erfindung ergibt sich dabei aus Anspruch 3. Durch diese Ausbildung der Zweiwegeventile werden diese beim Auffüllen des Druckluftsystems solange geschlossen gehalten, bis sich im Druckluftsystem ein Druck entsprechend der Federvorspannung der Rückstellfeder der Zweiwegeventile eingestellt hat. Damit ist ein Auffüllen des Druckluftsystems vom erstem Moment an auch bei niedriger Kompressorleistung möglich. Beim Abschalten eines im Druckluftsystem vorhandenen Druckreglers bleibt -ein Rückschlagventil in diesem vorausgesetzt -in den Lufttrocknern ein Druck entsprechend dem von den Rückstellfedern der Zweiwegeventile vorgegebenen Schließdruck bestehen.Damit verbleibt ein Druckluftvolumen in den Lufttrocknern, das von dem Luftkompressor nicht nachgefördert werden muß.

Eine vorteilhafte Ausführungsform der Erfindung ergibt sich auch aus Anspruch 6. Durch diese konstruktive Ausbildung kann das Trockenmittel im Bedarfsfall durch Wechsel der Trockenbox ersetzt werden und damit im Störungsfall die gesamte Lufttrocknungsvorrichtung regeneriert werden.

Eine vorteilhafte Ausführungsform der Erfindung ergibt sich auch aus Anspruch 7. Durch diese konstruktive Maßnahme wird in den Lufttrocknern anfallendes Kondensat über die Zweiwegeventile ins Freie befördert und kann sich nicht in den Lufttrocknern sammeln.

Eine vorteilhafte Ausführungsform der Erfindung ergibt sich weiterhin aus Anspruch 10. Durch das zusätzliche Zweidruckventil ist gewährleistet, daß beim Umschalten der Lufttrockner von der Trocknungs-in die Regenerationsphase und umgekehrt sich stets in definierten Zeitintervallen auf beiden Seiten des Wechselventils ein gleicher Druck aufbaut, was für die Umschaltung des Wechselventils erforderlich ist. Unter Zweidruckventil wird hier ein solches pneumatisches Ventil verstanden, das nur bei gleichem Eingangsdruck an seinen beiden Eingängen einen Ausgangsdruck abgibt und bei Absinken des Eingangsdrucks an einem Eingang den Ausgang abschließt.

Eine vorteilhafte Ausführungsform der Erfindung ergibt sich auch aus Anspruch 11. Durch das gleichzeitige Sperren der Entlüftungsausgänge der Zweiwegeventile in bestimmten Zeitintervallen zwischen deren Umsteuerung wird auch hier sichergestellt, daß sich an den beiden Ausgängen des Wechselventils in definierten Zeiträumen gleiche für dessen Umschaltung erforderliche Drücke aufbauen können.

Eine vorteilhafte Ausführungsform der Erfindung ergibt sich aus Anspruch 13. Bei dieser Ausführungsform kann der üblicherweise in Druckluftsystemen dem Lufttrockner vorgeschaltete Druckregler eingespart werden. Dessen Funktion übernehmen die Zweiwegeventile in den einzelnen Lufttrocknern in Verbindung mit dem Druckschalter am Ausgang des weiteren Rückschlagventils. Übersteigt der Druck am Ausgang des weiteren Rückschlagventils den vorgegebenen Betriebsdruck des Druckluftsystems, und damit die Ansprechschwelle des Druckschalters, so werden beide Zweiwegeventile in ihre Entlüftungsöffnung umgeschaltet. Sinkt der Druck am Ausgang des weiteren Rückschlagventils wieder unter die Ansprechschwelle des Druckschalters ab, so werden die 3/2-Wege-Magnetventile wieder im vorgegebenen Zeittakt gesteuert.

Zeichnung

Die Erfindung ist anhand von in der Zeichnung dargestellten Ausführungsbeispielen in der nachfolgenden Beschreibung näher erläutert. Es zeigen:

Fig. 1 bis 3 jeweils ein Blockschaltbild einer Druckluftversorgungseinrichtung für eine Druckluftbremsanlage eines Nutzfahrzeugs mit einer Druckluftrocknungsvorrichtung gemäß einem ersten, zweiten und dritten Ausführungsbeispiel,

Fig. 4 ein Zeitablaufdiagramm für die Steuerventilansteuerung in der rucklufttrocknungsvorrichtung gemäß Fig. 3.

Beschreibung der Ausführungsbeispiele

Die in Fig.1 integriert in eine Druckluftversorgungseinrichtung dargestellte Vorrichtung 10 zum Trocknen von Druckluft für eine Nutzfahrzeug-Druckluftbremsanlage ist eingangsseitig über einen Druckregler 11 mit einem Verdichter oder Luftkompressor 12 und ausgangsseitig mit einem Vierkreis-Schutzventil 13 verbunden. Das an sich bekannte Vierkreis-Schutzventil 13 dient zum Anschluß der Druckluftbremsanlage, und zwar der beiden Betriebsbremskreise, des Feststellbrems-und Anhängerkreises und eines Nebenverbraucherkreises.

Die Druckluftrocknungsvorrichtung 10 weist zwei im Druckluftstrom einander parallel geschaltete Lufttrockner 14,15 auf, deren Eingänge 16,17 mit jeweils einem von zwei Auslässen eines Wechselventils 18, auch Doppelsteuerventil oder Doppelrückschlagventil genannt, und deren Ausgänge 19,20 mit dem Einlaß eines Rückschlagventils 21 verbunden sind, dessen Auslaß an dem Vierkreis-Schutzventil 13 angeschlossen ist. Jeder Lufttrockner 14 bzw. 15 hat ein in der Zeichnung durch Strichpunktierung schematisch angedeutetes Gehäuse 22 Trockenmittelbehälter oder Trockenmittelbox 24 bzw. 25 zwecks Auswechseln des Trockenmittels lösbar angesetzt ist. Bei angesetzter Trockenmittelbox 24 bzw. 25 ist deren Lufteinlaß unmittelbar mit dem Eingang 16 bzw. 17 des Lufttrockners 14 bzw. 15 verbunden, während der Luftauslaß der Trockenmittelbox 24 bzw. 25 an einem Luftkanal-Verzweigungspunkt 26 bzw. 27 im Gehäuse 22 bzw. 23 liegt. Der Luftkanal-Verzweigungspunkt 26,27 ist über ein Rückschlagventil 28 bzw. 29 mit dem Ausgang 19 bzw. 20 des Lufttrockners 14 bzw. 15 verbunden.

Dem Rückschlagventil 28 bzw. 29 ist ein Drosselventil 30 bzw. 31 parallel geschaltet. Der Trockenmittelbox 24 bzw. 25 ist ein Druckregelventil 32 bzw. 33 (Druckminderer oder Überströmventil) parallel geschaltet, das damit zwischen Eingang 16 bzw. 17 und dem Luftkanal-Verzweigungspunkt 26 bzw. 27 liegt. An dem Einlaß der Trockenmittelbox 24 bzw. 25 und damit am Eingang 16 bzw. 17 des Lufttrockners 14 bzw. 15 ist außerdem noch ein Zweiwegeventil 34 bzw. 35 angeschlossen, das in seiner einen Schaltstellung den Eingang 16 bzw. 17 mit einer Entlüftungsöffnung 36 bzw. 37 verbindet und in seiner anderen Schaltstellung die Entlüftungsöffnung absperrt. Das Rückschlagventil 28 bzw. 29, das Drosselventil 30 bzw. 31, das Druckregelventil 32 bzw. 33 und das Zweiwegeventil 34 bzw. 35 sind jeweils in dem Gehäuse 22 bzw. 23 des Lufttrockners 14 bzw. 15 integriert, wobei die Entlüftungsöffnung 36 bzw. 37 des Zweiwegeventils 34 bzw. 35 im tiefsten Punkt des Gehäuses 22 bzw. 23 angeordnet ist, damit im Lufttrockner 14, 15 anfallendes Kondensat über die Entlüftungsöffnung 36 bzw. 37 austreten kann.

Die beiden Lufttrockner 14,15 werden wechselweise in einer Trocknungs-und in einer Regenerationsphase betrieben. In der Trocknungsphase wird die vom Luftkompressor 12 kommende feuchte Druckluft bei Druchströmen des in der Trockenmittelbox 24 bzw. 25 enthaltenen Trockenmittels getrocknet, während in der Regenerationsphase die nunmehr in dem Trockenmittel enthaltene Feuchtigkeit dadurch beseitigt wird, daß dem jeweils in der Regenerationsphase befindlichen Lufttrockner 14 bzw. 15 eine mittels des Drosselventils 30 bzw. 31 abgezweigte getrocknete Teilluftmenge vom anderen Lufttrockner 14 bzw. 15 zugeführt wird, die nach Durchströmen des Trockenmittels über die Entlüftungsöffnung 36 bzw. 37 austritt. Der wechselweise Betrieb der beiden Lufttrockner 14,15 wird durch ein als 4/2-Wege-Magnetventil 38 ausgebildetes Steuerventil 40 gesteuert,dessen Erregerwicklung über einen zeitabhängig getakteten Schalter an eine Gleichspannungsquelle angeschlossen ist. Von den vier geschalteten Anschlüssen des 4/2-Wege-Magnetventils 38 ist ein Ausgangsanschluß entlüftet, zwei Ausgangsanschlüsse mit jeweils einem Steuereingang der beiden Zweiwegeventile 34,35 und ein Eingangsanschluß über eine Druckluftleitung 39 mit dem Ausgang 20 des Lufttrockners 15 verbunden.

Die pneumatisch gesteuerten Zweiwegeventile 34,35 weisen eine Rückstellfeder auf und sind so ausgebildet, daß in der ungesteuerten Ruhelage die beiden Zweiwegeventile 34,35 ihre Sperrstellung einnehmen und in der gesteuerten Arbeitsstellung den Eingang 16 bzw. 17 des Lufttrockners mit der Entlüftungsöffnung 36 bzw. 37 verbinden. Die Zweiwegeventile 34,35 sind außerdem so ausgebildet, daß sie in ihrer Sperrstellung ein Druckbegrenzungsventil (Sicherheitsventil) darstellen. Bei einem vom Druckregler 11 eingestellten Luftdruck im Druckmittelsystem von z.B. 8 bar ist die Federrückstellung der beiden Zweiwegeventile 34,35 derart eingestellt, daß der über die Steuereingänge aufzubringende Schaltdruck zum Umschalten der Zweiwegeventile 34,35 in ihre Entlüftungsstellung ca. 6,5 bar beträgt.

Die Wirkungsweise der beschriebenen Druckklufttrocknungsvorrichtung ist wie folgt:

In der in der Zeichnung dargestellten Schaltstellung des 4/2-Wege-Magnetventils 38 und des Wechselventils 18 strömt die vom Luftkompressor 12 kommende Druckluft in den Lufttrockner 15 während der Lufttrockner 14 drucklos geschaltet ist. Die feuchte Druckluft durchströmt das Trockenmittel der Trockenmittelbox 25, wo ihr die Feuchtigkeit entzogen wird. Die die Trockenmittelbox 25 verlassende getrocknete Druckluft gelangt über den Luftkanal-Verzweigungspunkt 27 und über das Rückschlagventil 28, dessen Durchflußrichtung zum Ausgang 20 des Lufttrockners hin gerichtet ist, an den Ausgang 20 des Lufttrockners 15. Von hier strömt die Druckluft über das Rückschlagventil 21 und das Vierkreis-Schutzventil 13 in die Druckluftbremsanlage.

Eine von dem Drosselventil 30 in dem Lufttrockner 14 bestimmte Teilluftmenge der getrockneten Druckluft strömt über diese zu dem Luftkanal-Verzweigungspunkt 26 -da die Sperrichtung des Rückschlagventils 28 zum Luftkanal-Verzweigungspunkt 26 hin gerichtet ist -und über das Trockenmittel 24 zu dem Eingang 16 des Lufttrockners 14. Der Druck am Ausgang 20 des Lufttrockners 15 steht als Steuerdruck an dem Steuereingang des Zweiwegeventils 34 an und hat dieses in seine Arbeitsstellung geschaltet, in welcher der Eingang 16 mit der Entlüftungsöffnung 36 verbunden ist, so daß die die Trockenmittelbox 24 unter Aufnahme von Feuchtigkeit aus dem Trockenmittel verlassende feuchte Druckluft in die Atmosphäre abströmt. Der Steuereingang des Zweiwegeventils 35 im Lufttrockner 15 ist über das 4/2-Wege-Magnetventil 38 entlüftet, so daß dieses Zweiwegeventil 35 seine die Entlüftungsöffnung 37 absperrende Ruhestellung einnimmt.

Nach einem bestimmten Zeittakt wird das 4/2-WegeMagnetventil 38 umgeschaltet, so daß nunmehr der Steuereingang des Zweiwegeventils 35 mit dem Ausgang 20 des Lufttrockners 15 und damit mit dem Einlaß des Rückschlagventils 21 verbunden ist, während der Steuereingang des Zweiwegeventils 34 entlüftet ist. Das Zweiwegeventil 34 nimmt seine Sperrstellung ein, und am Eingang 16 des Lufttrockners 14 baut sich ein Luftdruck auf, der das Wechselventil 18 umschaltet, so daß nunmehr die vom Kompressor 12 kommende feuchte Druckluft in den Lufttrockner 14 strömt. In gleicher Weise wird nunmehr die feuchte Druckluft durch das Trockenmittel in der Trockenmittelbox 24 getrocknet, und die getrocknete Druckluft strömt über das Rückschlagventil 28, dem Ausgang 19 des Lufttrockners 14 und über das Rückschlagventil 21 zu dem Vierkreis-Schutzventil 13. Eine von der Drossel 31 im Lufttrockner 15 bestimmte Teilluftmenge der getrockneten Druckluft strömt über die Drossel 31 in die Trockenmittelbox 25 und entzieht hier dem Trockenmittel Feuchtigkeit. Da der Druck am Ausgang 19 des Lufttrockners 14 bzw. am Einlaß des Rückschlagventils 21 als Steuerdruck an dem Steuereingang des Zweiwegeventils 37 anliegt, nimmt letzteres seine Entlüftungsstellung ein, so daß die die Trockenmittelbox 25 durchströmende Regenerationsluft an der Entlüftungsöffnung 37 in die Atmosphäre austritt. Der Lufttrockner 15 wird damit in der Regenerationsphase und der Lufttrockner 14 in der Trocknungsphase betrieben.

Bei erstmaligem Auffüllen des Druckluftsystems ist zunächst der Steuerdruck von 6,5 bar am Eingang des Rückschlagventils 21 nicht erreicht. Damit nehmen beide Zweiwegeventile 34,35 ihre Sperrstellung ein. Die vom Luftkompressor 12 geförderte Druckluft gelangt dann ungeteilt zu dem Rückschlagventil 21 und über das Vierkreis-Schutzventil 13 in das Druckluftsystem. Das Druckluftsystem wird damit vom ersten Moment an auch bei niedriger Kompressorleistung aufgefüllt. Erst wenn der Luftdruck im Druckluftsystem den von den Rückstellfedern der Zweiwegeventile 34,35 vorgegebenen Schaltdruck erreicht hat, wird eines der beiden Zweiwegeventile 34,35 aufgesteuert und die vorstehend beschriebene Wirkungsweise der Druckklufttrocknungsvorrichtung 10 setzt ein, in welcher jeweils abwechselnd der eine Lufttrockner 14 in der Trocknungsphase und der andere Lufttrockner 15 in der Regenerationsphase oder umgekehrt betrieben wird. Die in der Sperrstellung als Sicherheitsventile wirkenden Zweiwegeventile 34,35 schützen die Druckklufttrocknungsvorrichtung vor erhöhtem Druck.

Wie in der Zeichnung durch Strichpunktierung schematisch angedeutet ist, ist das 4/2-Wege-Magnetventil 38 an das Gehäuse 23 des Lufttrockners 15 angeflanscht. Die Verbindungen zu dem Steuereingang des Zweiwegeventils 35 können dann als Stichkanäle im Gehäuse 23 ausgeführt werden. Die für die Steuerung des 4/2-WegeMagnetventils 38 erforderliche Zeittaktsteuerung kann vorteilhaft im Magnetgehäuse des Ventils integriert werden.

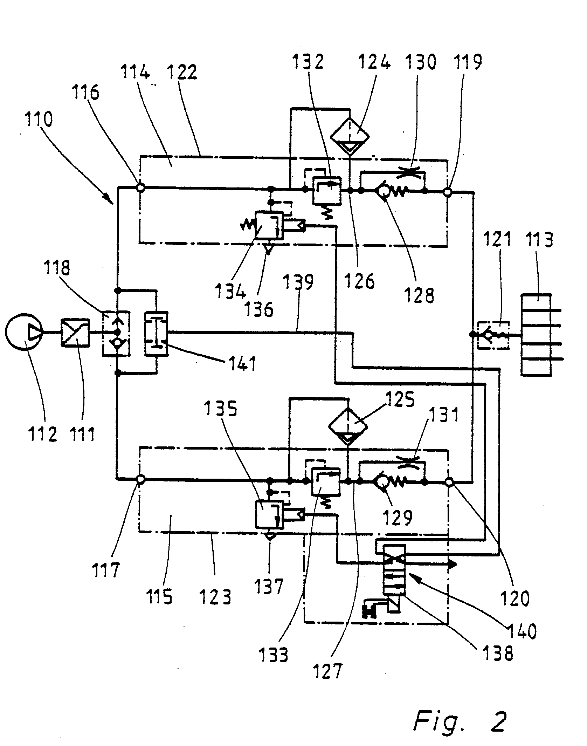

Die in Fig. 2 dargestellte Druckluftversorgungseinrichtung besteht wiederum aus Luftkompressor 112, Druckregler 111, Lufttrocknungsvorrichtung 110 und Vierkreis-Schutzventil 113. Aufbau und Wirkungsweise der Lufttrocknungsvorrichtung 110 sind bis auf eine nach stehende Modifikation wie zu Fig. 1 beschrieben, so daß insoweit auf die vorstehenden Ausführungen verwiesen wird. Gleiche Bauteile der Druckluftversorgungsvorrichtung in Fig. 2 sind in Hinblick auf Fig.1 mit gleichen, um 100 erhöhten Bezugszeichen versehen.

Bei der Lufttrocknungsvorrichtung 10 in Fig.1 ist zum Umschalten der Lufttrockner 14,15 auf beiden Ausgangsseiten des Wechselventils 18 der gleiche Druck erforderlich. Infolge der Drosselventile 30, 31, über welche die Regenerationsluft für den jeweiligen Lufttrockner 14,15 geführt wird, ist jedoch nicht sichergestellt, daß sich beim Umschalten des Steuerventils 40 der Druck am Eingang des zuvor in der Regenerationsphase befindlichen und damit drucklos geschalteten Lufttrockners 14 bzw. 15 in einem definierten Zeitintervall schnell genug aufbaut. Dies wird bei der Lufttrocknungsvorrichtung gemäß Fig. 2 durch das zusätzliche Zweidruckventil 141 gewährleistet. Jeweils einer von den beiden Eingängen des Zweidruckventils 141 ist mit einem der beiden Ausgänge des Wechselventils 118 verbunden. Die Druckluftversorgungsleitung 139 für den Eingangsanschluß des auch hier als 4/2-Wege-Magnetventils 138 ausgebildeten Steuerventils 140 ist -nicht wie in Fig.1 an den Ausgang 20 des Lufttrockners 15 -sondern an dem Ausgang des Zweidruckventils 141 angeschlossen. Damit wird nur bei Gleichdruck an den beiden Ausgängen des Wechselventils 118 über das Zweidruckventil 141 die Druckluftversorgungsleitung 139 mit Druckluft versorgt. Nach Umschalten des 4/2-Wege-Magnetventils 138 nehmen damit zunächst beide Zweiwegeventile 134,135 ihre Sperrstellung ein, in welcher der Entlüftungsausgang 136 bzw. 137 abge sperrt ist. Hat sich in beiden Lufttrocknern 114,115 der gleiche Luftdruck eingestellt, so stellt sich am Ausgang des Zweidruckventils 141 ein Ausgangsdruck ein, der das Zweiwegeventil 134 bzw. 135 des jeweils in die Regenerationsphase umgeschalteten Lufttrockners 114 bzw. 115 in seine den Entlüftungsausgang 136 bzw. 137 freigebende Entlüftungsstellung umsteuert. Der Druck in der Druckluftversorgungsleitung 139 und damit am Steuereingang des betreffenden Zweiwegeventils 134 bzw. 135 wird solange aufrecht erhalten, bis das 4/2-Wege-Magnetventil 138 wieder umschaltet. In der in Fig. 2 dargestelltenSchaltstellung des Wechselventils 118 befindet sich der Lufttrockner 114 in Trocknungsphase (Steuereingang des Zweiwegeventils 134 ist entlüftet und damit der Entlüftungsausgang 136 abgesperrt) und der Lufttrockner 115 in Regenerationsphase (Steuereingang des Zweiwegeventils 135 wird über die Druckluftleitung 139 mit Druckluft beaufschlagt und damit der Entlüftungsausgang 137 freigegeben).

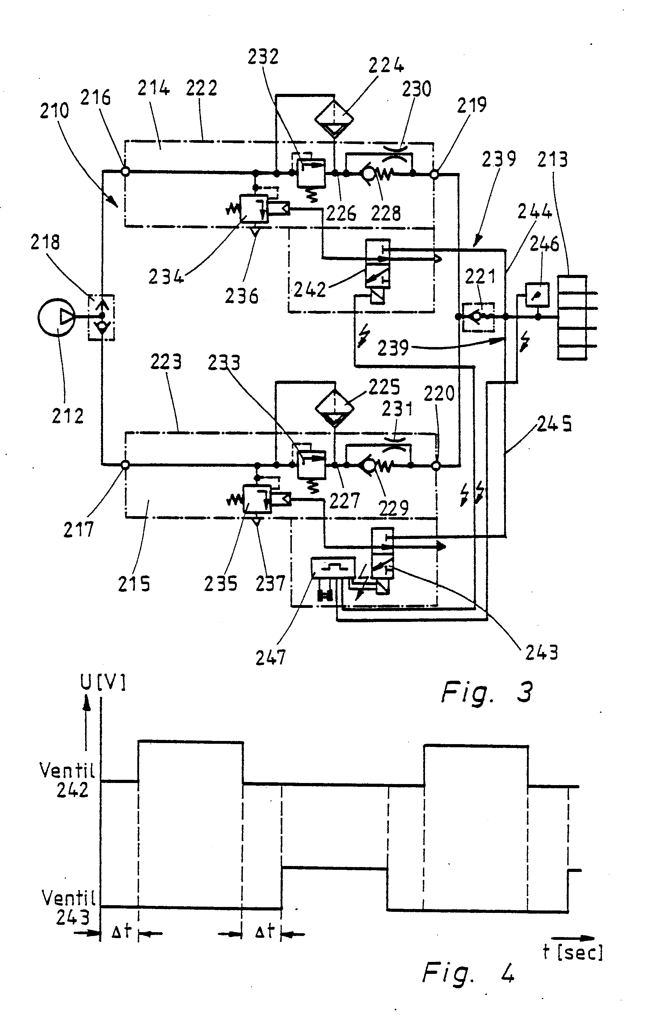

Auch die Abwandlung der Druckklufttrocknungsvorrichtung 210 in Fig. 3 gegenüber der Druckklufttrocknungsvorrichtung 10 in Fig. 1 dient dem Zweck, den zum Umschalten des Wechselventils 218 erforderlichen Gleichdruck an beiden Ausgängen des Wechselventils 218 in einem definierten Zeitraum herzustellen. Da Aufbau und Wirkungsweise wiederum weitgehend gleich sind, sind gleiche Bauteile mit gleichen, um 200 erhöhten Bezugszeichen versehen.

Bei der Lufttrocknungsvorrichtung 210 ist das Steuerventil 240 von zwei 3/2-Wege-Magnetventilen 242,243 gebildet, von denen jeweils eines einem der beiden Lufttrockner 214,215 zugeordnet ist. Bei jedem 3/2-Wege-Magnetventil 242 bzw. 243 ist von den drei gesteuerten Anschlüssen ein Ausgangsanschluß entlüftet, ein weiterer Ausgangsanschluß an dem Steuereingang des dem Lufttrockner 214 bzw. 215 zugehörigen Zweiwegeventils 234 bzw. 235 angeschlossen und ein Eingangsanschluß mit der Druckluftversorgungsleitung 239 verbunden, die hier von einer Druckluftleitung 244 bzw. 245 gebildet wird, die jeweils am Ausgang des weiteren Rückschlagventils 221 angeschlossen ist. Die 3/2-Wege-Magnetventile 242,243 werden von einer gemeinsamen Zeitsteuerschaltung 247 angesteuert, welche an die Magnetwicklungen der 3/2-Wege-Magnetventile 242,243 alternierend Erregerimpulse anlegt, deren zeitlicher Verlauf in Fig. 4 dargestellt ist. Wie dort zu sehen ist, sind beide 3/2-Wege-Magnetventile 242,243 in Zeitintervallen Δ t ungesteuert und nehmen ihre Grundstellung ein, in welcher die Steuereingänge der beiden Zweiwegeventile 234,235 entlüftet sind. Damit sind in diesen Zeitintervallen Δ t die Entlüftungsausgänge 236,237 beider Zweiwegeventile 234,235 geschlossen. Jedes Zeitintervall Δ t, das einer Umsteuerung des 3/2-Wege-Magnetventils 242 bzw. 243 von der Ruhestellung in die Arbeitsstellung vorausgeht, ist so bemessen, daß sich in dem zuvor drucklos geschalteten Lufttrockner 214 bzw. 215 mit Sperren des Entlüftungsausgangs 236 bzw. 237 des Zweiwegeventils 234 bzw. 235 ein Druck aufbauen kann, der zur Umschaltung des Wechselventils 218 führt. In der in Fig.3 dargestellten Schaltstellung des Wechselventils 218 befindet sich der Lufttrockner 214 in der Trocknungsphase und der Lufttrockner 215 in der Regenerationsphase. Beide 3/2-Wege-Magnetventile 242,243 sind ungesteuert und entlüften damit die Steuereingänge der Zweiwegeventile 234,235. Beide Zweiwegeventile 234,235 nehmen ihre Sperr stellung ein. In dem Lufttrockner 215 baut sich nunmehr über die Regenerationsluftdrossel 231 ein Luftdruck auf, der in dem Zeitintervall Δ t so groß wird wie der Druck am Eingang 216 des Lufttrockners 214. Das Wechselventil 218 schaltet um und gleichzeitig wird das 3/2-Wege-Magnetventil 242 mit einem Erregerimpuls (Fig.4) beaufschlagt. Das Magnetventil 242 schaltet um und legt den Steuereingang des Zweiwegeventils 234 an dem Ausgang des weiteren Rückschlagventils 221. Das Zweiwegeventil 234 schaltet in seine Arbeitsstellung um und gibt den Entlüftungsausgang 236 frei. Der über das Wechselventil 218 abgesperrte Lufttrockner 214 geht damit in seine Regenerationsphase über.

Die Drucklufttrocknungsvorrichtung 210 in Fig.3 ist unmittelbar an dem Luftkompressor 212 angeschlossen. Der in Fig. 1 und 2 zu sehende Druckregler ist hier entfallen. Dessen Funktion wird von den beiden 3/2-Wege-Magnetventilen 242,243, in Verbindung mit einem Druckschalter 246 übernommen. Der Druckschalter ist am Ausgang des weiteren Rückschlagventils 221 angeschlossen und stellt einen Zweipunktregler dar, der einen elektrischen Schaltkontakt oberhalb eines vorgegebenen Ansprechdruckes schließt und unterhalb des Ansprechdruckes öffnet oder umgekehrt. Der Ansprechdruck ist dabei gleich dem Betriebsdruck des Druckluftsystems, üblicherweise 8 bar, festgelegt. Über den elektrischen Schaltkontakt wird die Zeitsteuerschaltung 247 in der Weise beeinflußt, daß für die Dauer eines über dem Ansprechdruck liegenden Luftdrucks am Ausgang des weiteren Rückschlagventils 221 die beiden 3/2-WegeMagnetventile 242 und 243 gleichzeitig erregt werden und damit die Zweiwegeventile 234 und 235 in ihre Ent lüftungsstellung übergehen. Die beiden Lufttrockner 214,215 werden dadurch solange entlüftet, bis der Luftdruck am Ausgang des weiteren Rückschlagventils 221 wieder unter den Betriebsdruck abgesunken ist. Damit schaltet der Druckschalter 246 wieder um und der elektrische Kontakt öffnet. Die Beeinflussung der Zeitsteuerschaltung 247 ist aufgehoben und die 3/2-Wege-Magnetventile 242,243 werden wieder in der beschriebenen und in Fig.4 dargestellten Weise angesteuert.

Bei Wegfall des Druckschalters 246 müssen die Druckluftleitungen 244,245 nicht mit dem Ausgang des weiteren Rückschlagventils 221 verbunden werden, sondern können unmittelbar an dem Ausgang 219 bzw. 220 des jeweils zugeordneten Lufttrockners 214 bzw. 215 angeschlossen sein. Jedes 3/2-Wege-Magnetventil 242 bzw. 243 wird zweckmäßigerweise an das Gehäuse 222 bzw. 223 des jeweils zugeordneten Lufttrockners 214,215 angeflanscht, wie dies in Fig.3 durch strichpunktierte Umrahmung symbolisiert ist. Die Zeitsteuerschaltung 247 kann dabei in das Gehäuse eines der beiden 3/2-Wege-Magnetventile 242 bzw. 243 integriert werden.

## Ansprüche

1. Vorrichtung zum Trocknen von Druckluft, insbesondere für Druckluftsysteme, wie Druckluftbremsanlagen, Türschließanlagen u.dgl., mit zwei im Druckluftstrom parallel angeordneten, wechselweise in einer Trocknungs-und in einer Regenerationsphase betriebenen, jeweils einen Trockenmittelbehälter aufweisenden Lufttrocknern, wobei dem jeweils in der Regenerationsphase befindlichen Lufttrockner an einem Auslaß des Trockenmittelbehälters eine mittels eines Drosselventils von dem Ausgang des anderen Lufttrockners abgezweigte getrocknete Teilluftmenge zugeführt wird, die nach Durchströmen des Trockenmittelbehälters über eine am Einlaß des Trockenmittelbehälters zuschaltbare Entlüftungsöffnung wieder austritt, und mit einem vorzugsweise zeitabhängig getakteten Steuerventil zum Umschalten der Lufttrockner in die eine oder andere Betriebsphase, dadurch gekennzeichnet, daß bei jedem Luft trockner (14,15; 114,115; 214,215) and dem Einlaß (16,17; 116,117; 216,217) des Trockenmittelbehälters (24,25; 124,125; 224,225) ein pneumatisch gesteuertes Zweiwegeventil (34,35; 134,135; 234,235) mit Federrückstellung angeschlossen ist, das die Entlüftungsöffnung in seiner einen Schaltstellung sperrt und in seiner anderen Schaltstellung freigibt, und zwischen dem Auslaß (26,27; 126,127; 226,227) des Trockenmittelbehälters (24,25; 124,125; 224,225) und dem Ausgang (19,20; 119,120; 219,220) des Lufttrockners (14,15; 114,115; 214,215) ein Rückschlagventil (28,29; 128,129; 228,229) mit zum Ausgang (19,20; 119,120; 219,220) hin gerichteter Durchflußrichtung eingeschaltet ist, daß das Steuerventil (40; 140; 240) wechwelweise die Steuereingänge der beiden Zweiwegeventile (34,35; 134,135; 234,235) be-und entlüftet und daß jeder Lufttrockner (14,15; 114,115; 214,215) eingangsseitig mit jeweils einem von zwei Auslässen eines Wechselventils (18; 118; 218) verbunden ist, dessen Einlaß mit dem ungetrockneten Druckluftstrom beaufschlagt ist.

2. Vorrichtung nach Anspruch 1, **dadurch gekennzeichnet**, daß das Drosselventil (30,31; 130,131; 230,231) in jedem Lufttrockner (14,15; 114,115; 214,215) jeweils parallel zu dem Rückschlagventil (28,29; 128,129; 228,229) zwischen Auslaß (26,27; 126,127; 226,227) des Trockenmittelbehälters (24,25; 124,125; 224,225) und Ausgang (19,20; 119,120; 219,220) des Lufttrockners (14,15; 114,115; 214,215) angeordnet ist.

3. Vorrichtung nach Anspruch 1 oder 2, **dadurch gekennzeichnet**, daß die Zweiwegeventile (34,35; 134,135; 234,235) derart ausgebildet sind, daß ihre ungesteuerte Ruhelage die Sperrstellung ist.

4. Vorrichtung nach einem der Ansprüche 1 -3 **dadurch gekennzeichnet**, daß die Zweiwegeventile (34,35; 134,135; 234,235) als in der Sperrstellung wirksame Druckbegrenzungs-oder Sicherheitsventile ausgebildet sind.

5. Vorrichtung nach einem der Ansprüche 1 -4, **dadurch gekennzeichnet**, daß die Ausgänge (19,20; 119,120; 219,220) der beiden Lufttrockner (14,15; 114,115; 214,215) an dem Einlaß eines weiteren Rückschlagventils (21; 121; 221) angeschlossen sind, an dessen Auslaß der getrocknete Druckluftstrom abnehmbar ist.

6. Vorrichtung nach einem der Ansprüche 1 -5, **dadurch gekennzeichnet** , daß in jedem Lufttrockner (14,15; 114,115; 214,215) das Drosselventil (30,31; 130,131; 230,231) das Rückschlagventil (28,29; 128,129; 228,229) und das Zweiwegeventil (34,35; 134,135; 234,235) in einem gemeinsamen Gehäuse (22,23; 122,123; 222,223) angeordnet sind, an welchem der Trockenmittelbehälter (24,25; 124,125; 224,225) vorzugsweise lösbar angesetzt ist.

7. Vorrichtung nach Anspruch 6, **dadurch gekennzeichnet**, daß die Entlüftungsöffnung (36,37; 136,137; 236,237) des Zweiwegeventils (34,35; 134,135; 234,235) im tiefsten Punkt des Ge häuses (22,23; 122,123; 222,223) angeordnet ist.

8. Vorrichtung nach Anspruch 6 oder 7, **dadurch gekennzeichnet**, daß jedem Trockenmittelbehälter (24,25; 124,125; 224,225) ein zum Auslaß (26,27; 126,127; 226,227). des Trockenmittelbehälters (24,25; 124,125; 224,225) hin wirkendes Druckregelventil (32,33; 132,133; 232,233) parallel geschaltet ist, das vorzugsweise in dem Gehäuse (22,23; 122,123; 222,223) des Lufttrockners (14,15; 114,115; 214,215) integriert ist.

9. Vorrichtung nach einem der Ansprüche 1 -8, **dadurch gekennzeichnet**, daß das Steuerventil (40; 140) als 4/2-Wege-Magnetventil (38; 138) ausgebildet ist, von dessen vier gesteuerten Anschlüssen ein Ausgangsanschluß entlüftet ist, zwei weitere Ausgangsanschlüsse mit jeweils einem Steuereingang der beiden Zweiwegeventile (34,35;134,135) verbunden sind und ein Eingangsanschluß an einer Druckluftversorgungsleitung (39;139) angeschlossen ist.

10. Vorrichtung nach Anspruch 9, **dadurch gekennzeichnet**, daß an den beiden Ausgängen des Wechselventils (118) die Eingänge eines Zweidruckventils (141) angeschlossen sind, dessen Ausgang über die Druckluftversorgungsleitung (139) mit dem Eingangsanschluß des 4/2-Wege-Magnetventils (138) verbunden ist.

11. Vorrichtung nach einem der Ansprüche 1 - 8, **dadurch gekennzeichnet**, daß das Steuerventil (240) von zwei 3/2-Wege-Magnetventilen (242,243) gebildet ist, von denen jeweils eines einem Lufttrockner (214,215) zugeordnet ist, daß von den drei gesteuerten Anschlüssen jedes 3/2-Wege-Magnetventils (242,243) ein Ausgangsanschluß entlüftet, ein weiterer Ausgangsanschluß an dem Steuereingang des dem Lufttrockner (214,215) zugehörigen Zweiwegeventils (234,235) angeschlossen und ein Eingangsanschluß mit der Druckluftversorgungsleitung (239) verbunden ist, und daß die elektromagnetische Ansteuerung der 3/2-Wege-Magnetventile (242,243) so getroffen ist, daß sie für ein vorgegebenens Zeitintervall ($\Delta$ t) gleichzeitig eine Schaltstellung einnehmen, in welcher eine Ansteuerung der Zweiwegeventile (234,235) derart erfolgt, daß letztere ihren Entlüftungsausgang (236,237) sperren.

12. Vorrichtung nach Anspruch 11,**dadurch gekennzeichnet**, daß am Ausgang des weiteren Rückschlagventils (222) ein Druckschalter (246) angeschlossen ist, dessen elektrischer Schaltausgang die Ansteuerung der 3/2-Wege-Magnetventile (242,243) derart beeinflußt, daß für die Dauer eines über dem Ansprechdruck liegenden Ausgangsdruckes am weiteren Rückschlagventil (221) beide Zweiwegeventile (242; 243) ihre die Entlüftungsöffnung (236,237) freigebende Schaltstellung einnehmen, und daß die Druckluftversorgungsleitung (239) jeweils von einer den Einlaßanschluß jedes 3/2-Wege-Magnetventils (242,243) mit dem Ausgang des weiteren Rückschlagventils (221) verbindenden Druckluftleitung (244,245) gebildet ist.

13. Vorrichtung nach Anspruch 12, **dadurch gekennzeichnet**, daß der Ansprechdruck des Druckschalters (246) etwa gleich dem Betriebsdruck des Druckluftsystems bemessen ist.

Fig. 1

Fig. 2

Fig. 3

Fig. 4